(19) Europäisches Patentamt
European Patent Office
Office européen des brevets

(11) **EP 3 625 591 B1**

(12) **EUROPEAN PATENT SPECIFICATION**

(45) Date of publication and mention
of the grant of the patent:
**27.09.2023 Bulletin 2023/39**

(51) International Patent Classification (IPC):
**G01S 19/36** *(2010.01)*   **H01Q 3/26** *(2006.01)*
**G01S 19/21** *(2010.01)*   **G01S 19/22** *(2010.01)*

(21) Application number: **18725922.1**

(22) Date of filing: **08.05.2018**

(52) Cooperative Patent Classification (CPC):
**G01S 19/36; H01P 1/184; H01Q 3/2605;**
**H01Q 3/34; H01Q 21/0075; H01Q 21/065;**
G01S 19/21; G01S 19/22

(86) International application number:
**PCT/IB2018/053178**

(87) International publication number:
**WO 2018/211356 (22.11.2018 Gazette 2018/47)**

(54) **APPARATUS AND METHOD FOR RECEIVING SATELLITE POSITIONING SIGNALS**

VORRICHTUNG UND VERFAHREN ZUM EMPFANG VON
SATELLITENPOSITIONIERUNGSSIGNALEN

APPAREIL ET PROCÉDÉ DE RÉCEPTION DE SIGNAUX DE POSITIONNEMENT PAR SATELLITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2017   IT 201700050784**

(43) Date of publication of application:
**25.03.2020   Bulletin 2020/13**

(73) Proprietors:
• **FONDAZIONE LINKS - Leading innovation &
knowledge
For Society
10138 Torino (IT)**
• **Politecnico di Torino
10129 Torino (IT)**

(72) Inventors:
• **GIORDANENGO, Giorgio
12017 Robilante (CN) (IT)**
• **RIGHERO, Marco
10138 Torino (IT)**
• **CICCIA, Simone
10028 Trofarello (TO) (IT)**
• **VECCHI, Giuseppe
10040 Leini' (TO) (IT)**

(74) Representative: **Ferroni, Filippo et al
Metroconsult Genova S.r.l.
Via Palestro, 5/2
16122 Genova (IT)**

(56) References cited:
**US-A- 5 952 968      US-A1- 2008 291 079
US-B1- 6 784 831**

**Description**

The present invention relates to an apparatus and a method for receiving satellite positioning signals, such as, for example, signals coming from the artificial satellites of the GPS, GALILEO, GLONASS, QZSS constellations or from any other satellite navigation system.

As is known, the availability of low-cost global positioning devices has resulted in the development of commercial services and products on a large scale, thus making it possible to locate people and vehicles throughout the world. These low-cost devices cannot, however, be used in applications wherein the position needs to be known with a precision of less than one meter, because the signal received from the satellites does not have a sufficiently high carrier-to-noise ratio (CNR or C/N) to estimate with a sufficient level of precision the time of flight of each positioning signal transmitted from the satellites.

In fact, the positioning device is configured for determining its own position (latitude, longitude and height) by solving the following system of equations:

$$\begin{cases} (X_1 - X_u)^2 + (Y_1 - Y_u)^2 + (Z_1 - Z_u)^2 = (R_1 - C_u)^2 \\ (X_2 - X_u)^2 + (Y_2 - Y_u)^2 + (Z_2 - Z_u)^2 = (R_2 - C_u)^2 \\ (X_3 - X_u)^2 + (Y_3 - Y_u)^2 + (Z_3 - Z_u)^2 = (R_3 - C_u)^2 \\ (X_4 - X_u)^2 + (Y_4 - Y_u)^2 + (Z_4 - Z_u)^2 = (R_4 - C_u)^2 \end{cases} \quad (1)$$

where the terms $X_u$, $Y_u$, $Z_u$ and $C_u$ are the unknown terms to be determined, respectively representing the latitude, the longitude, the height, and the deviation of the clock of the device from the clock of the satellites, which are all mutually synchronized, the terms $X_1,Y_1,Z_1;...;X_4,Y_4,Z_4$ are the positions of the four satellites (necessary for determining the position of the device) and are determined by said device on the basis of part of the data contained in each positioning signal (i.e. the ephemerides of the satellite transmitting the signal and the time instant at which transmission has occurred), while the terms $R_1,...,R_4$ are determined as follows:

$$R_i = c \cdot T_i \quad 1 \le i \le 4 \quad (2)$$

where c is the speed of light and $T_i$ is the time of flight of the positioning signal emitted by the i-th satellite, wherein the time of flight $T_i$ is the result of the arithmetic difference between the time instant at which the signal has been received (determined by means of the internal clock of the device) and the time instant at which the transmission of said signal has occurred (determined on the basis of the information contained in the signal itself).

From this brief summary it is possible to appreciate how the carrier-to-noise ratio can affect the precision with which the time instant of reception of the satellite positioning signal is determined; in fact, the higher the carrier-to-noise ratio, the higher the precision with which the device can determine the time instant of reception of the signal, because the signal can be detected more effectively by the receiver of said device.

In order to increase the level of positioning accuracy, one known solution makes use of two or more positioning apparatuses, positioned at a known distance from each other, and a processing device (e.g. a PC, a smartphone, or the like) configured for determining the position by using the information coming from each one of said positioning apparatuses and by taking into account the distance that separates said receivers, so as to be able to remove a large part of the effects of noise. This solution cannot however be easily exploited in applications where space and energy consumption are important factors, because the required use of two or more positioning apparatuses results in doubled energy consumption and space occupation.

Another source of noise is due to the effects of the multipath and/or of interfering (jamming) sources and/or signal sources trying to simulate satellite positioning signals by inserting fake signals intended to cause wrong positioning (spoofing). As described in American patent application publication US 2014/375500 A1 by ELECTRONICS AND TELECOMMUNICATIONS RESEARCH INSTITUTE, the effects caused by these sources of noise can be mitigated by using a plurality of receivers connected to one another by means of a beam-forming network, the primary task of which is to reduce the noise (also artificial noise) coming from a certain direction by selectively turning off those receivers which introduce the most noise in the positioning device. It is apparent that this solution is not suitable for increasing the carrier-to-noise ratio, since it prevents signals from entering the positioning devices in particular situations.

Furthermore, American patent publication US 5,952,968 by ROCKWELL INTERNATIONAL CORPORATION describes a solution for reducing the effects of interfering (jamming) sources by using a beam-forming network operating downstream of frequency converters (down converters), each one of which is positioned downstream of an antenna.

Nevertheless, this solution requires a modification to the receiver apparatus, and cannot therefore be used in association with existing receivers. Moreover, such a solution suffers from a number of criticalities as far as reliability is concerned, because the presence of the converters decreases the mean time between failures. In addition to this, the position calculated by the positioning device is disadvantageously affected by a (constant) minimum positioning error beyond which it is impossible to go, since the converters introduce both background noise and a phase delay which cannot be exactly quantified and which is due to the presence of oscillator circuits that are inevitably affected by thermal phenomena.

Both American patent publication US 6,784,831 B1 by TIA MOBILE INC. and American patent application publication US 2008/291079 A1 by CHANG describe solutions similar to the one discussed above, i.e. a plurality of frequency converters (down converters), each of which is positioned downstream of an antenna. For this reason, these solutions suffer from the same drawbacks mentioned above.

The present invention aims at solving these and other problems by providing an apparatus and a method for receiving satellite positioning signals.

The basic idea of the present invention is to use a plurality of antennae for receiving satellite positioning signals, wherein each one of said antennae is (directly) connected to a phase shifter, and wherein the outputs of said phase shifters are connected to one another by means of an output collector, in which constructive interference can be generated between the signals coming from the satellites (and received by the antennae) and/or disruptive interference can be generated between the reflections of said signals and/or between signals coming from sources located in positions other than those of the satellites of a constellation of artificial satellites (such as, for example, fake signals transmitted from a ground or sea station).

In this way it is possible to increase the carrier-to-noise gain of the signal, which can then be acquired by a positioning device positioned downstream of said phase shifters, thereby also reducing the multipath effects, because constructive interference will only be produced between the signals directly received from the satellites, and not between the reflections of said signals, which will interfere with one another in an advantageously disruptive manner.

Further advantageous features of the present invention are set out in the appended claims.

These features as well as further advantages of the present invention will become more apparent from the following description of an embodiment thereof as shown in the annexed drawings, which are supplied by way of non-limiting example, wherein:

- Fig. 1 is a block diagram of an apparatus for receiving satellite positioning signals according to the invention;
- Fig. 2 is a block diagram that shows the main elements of an antenna array comprised in the apparatus of Fig. 1;
- Fig. 3 is a block diagram of the apparatus of Fig. 1, which shows the main elements of a control unit that may be comprised in said apparatus;
- Fig. 4 is a block diagram that shows a method for receiving satellite positioning signals according to the invention;
- Fig. 5 shows a diagram of a beam-forming network comprised in the antenna array of Fig. 2;
- Fig. 6 is a block diagram of the beam-forming network of Fig. 5;

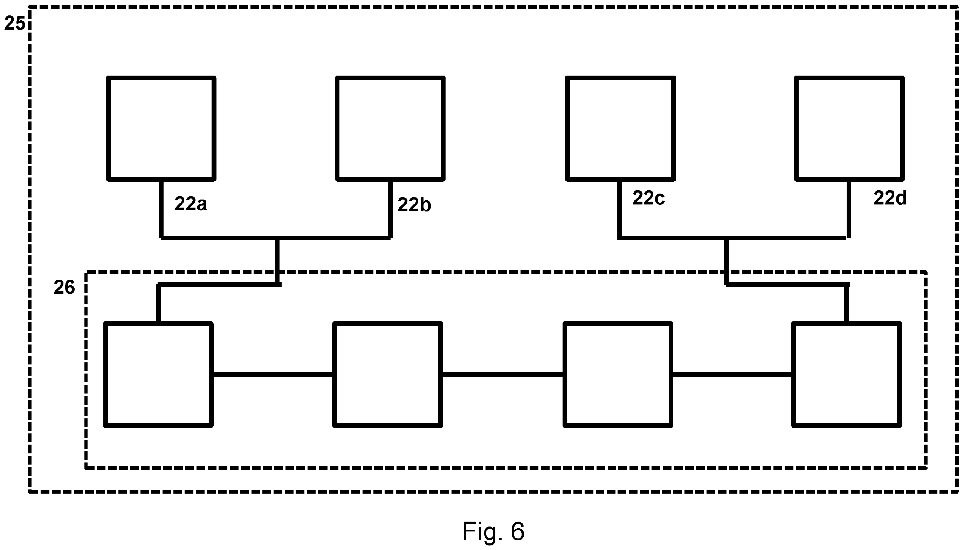

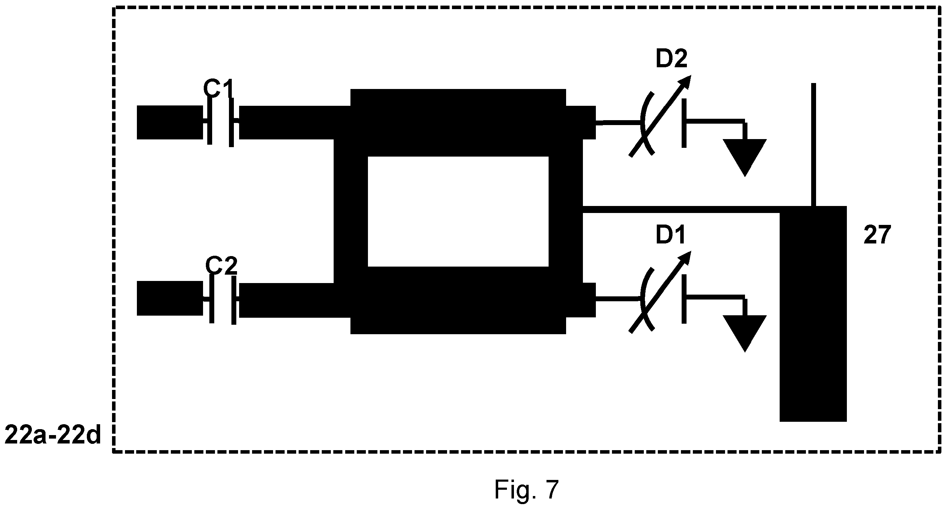

- Fig. 7 is a circuit diagram of a detail of Fig. 6, particularly of one possible physical implementation of a phase shifter. Any reference to "an embodiment" in this description will indicate that a particular configuration, structure or feature is comprised in at least one embodiment of the invention. Therefore, the phrase "in an embodiment" and other similar phrases, which may be present in different parts of this description, will not necessarily be all related to the same embodiment. Furthermore, any particular configuration, structure or feature may be combined in one or more embodiments as deemed appropriate. The references below are therefore used only for simplicity's sake and do not limit the protection scope or extent of the various embodiments.

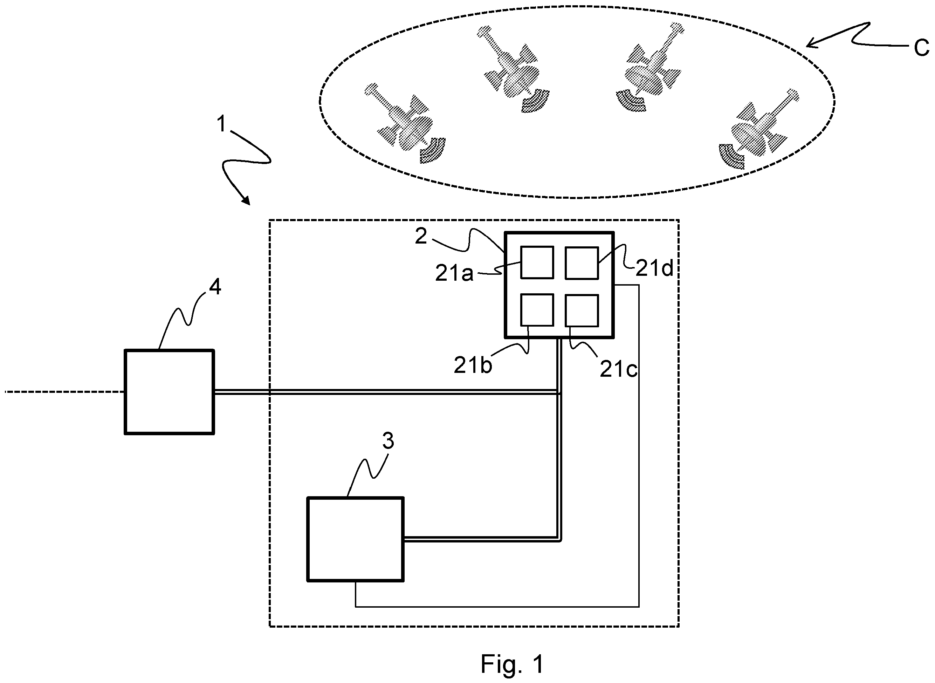

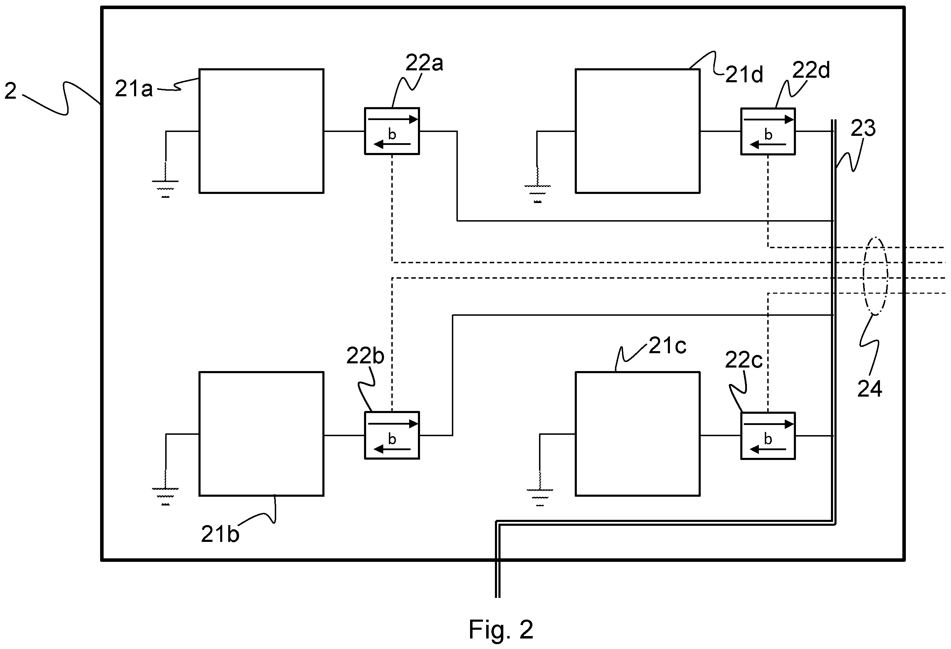

With reference to Figures 1 and 2, the following will describe an apparatus 1 for receiving satellite signals according to the invention.

The apparatus 1 comprises an antenna array 2 comprising the following parts:

- at least two antennae 21a,21b,21c,21d that can receive satellite positioning signals generated by at least one constellation of artificial satellites C (such as, for example, the GPS, GALILEO, GLONASS satellite constellations), i.e. said antennae 21a-21d are designed for receiving radio signals having a 1575.42MHz and/or 1227.6MHz frequency and/or another frequency used for transmission of satellite positioning signals;
- at least two phase shifters 22a,22b,22c,22d, wherein each phase shifter 22a-22d has an input connected to one of the antennae 21a-21d, i.e. in direct communication with one of said antennae 21a-21d;
- an output collector 23, preferably consisting of a guiding structure for radio frequency signals, which has a known impedance value and can be put in communication with a positioning device 4 (also referred to as external receiver), wherein the outputs of said phase shifters 22a-22d are connected to one another (preferably in series or in parallel) by means of said output collector 23, in which constructive interference can be generated between the satellite positioning signals and/or disruptive interference can be generated between the reflections of said satellite positioning signals.

In this way, constructive interference can be generated between the satellite positioning signals, which are received by the antennae 21a-22d and (appropriately) phase-shifted by the phase shifter 22a-22d, and/or disruptive interference can be generated between the reflections of said satellite positioning signals, thereby increasing the carrier-to-noise ratio and consequently reducing the positioning error of a positioning device.

Each phase shifter 22a-22d comprises a control input that can receive a control signal over a control line 24 (represented in Fig. 2 as a sheaf of dashed lines); said control line may be of the point-to-point type, i.e. one line per phase shifter (as shown in Figure 2).

As an alternative to the above, the control line may be shared by two or more phase shifter, e.g. by using an I2C bus or another type of bus that allows directing the data being transmitted over said control line.

In the preferred embodiment, the antenna array 2 is preferably implemented by using four antennae 21a,21b,21c,21d, wherein the output collector 23 is then connected, via a transmission line, preferably a coaxial one, to a satellite positioning device 4, which may be of a type known in the art (such as, for example, a UBX-G7020, UBX-G8020 receiver or the like).

It must be pointed out that the outputs of the phase shifters 22a-22d illustrated in Fig. 2 are connected in parallel to one another, but they may also be connected in series or by means of a combination of series and parallel connections, so as to advantageously obtain an output impedance more similar to that of the transmission line, which usually corresponds to the input impedance of the satellite positioning device 4, i.e. 50 Ohm or 75 Ohm.

In addition to the above, the apparatus 1 may also comprise a control unit 3 (which will be further described hereinafter) configured for controlling the phase shifters 22a-22d according to at least one control logic, so as to increase the carrier-to-noise ratio of at least one of the signals received by means of the antennae 21a-21d.

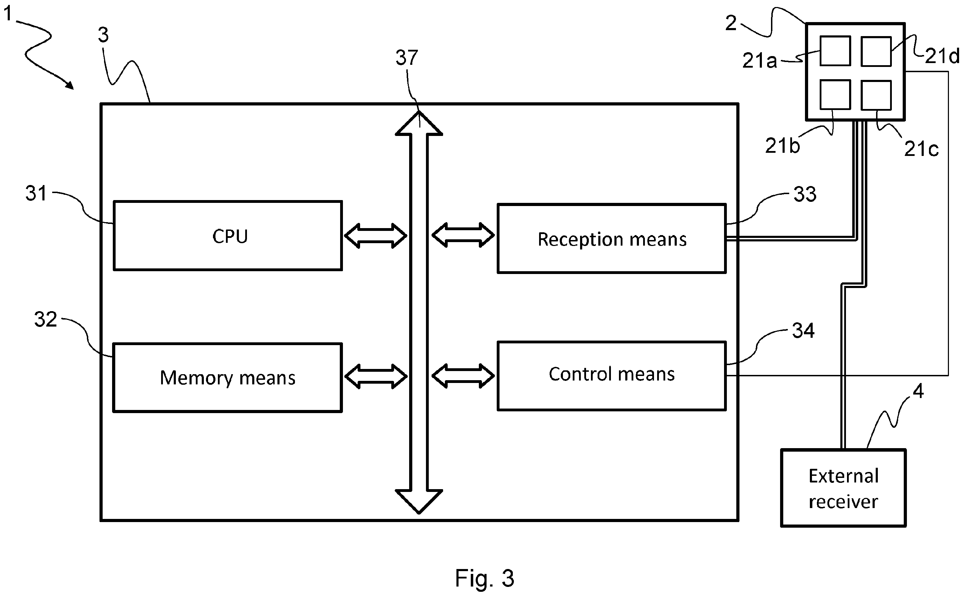

Also with reference to Fig. 3, the following will describe the control unit 3, which may preferably be implemented by using a microcontroller and may preferably comprise the following parts:

- processing means 31, e.g. one or more CPUs, governing the operation of the device 3, preferably in a programmable manner, through the execution of suitable instructions;
- memory means 32, e.g. a Flash, ROM, magnetic memory or the like, in signal communication with the processing means 31, wherein said memory means 32 store at least instructions readable by the processing means 31 and implementing said at least one control logic;
- reception means 33, e.g. a circuit for reception and demodulation of radio signals (RF front end), adapted to determine the carrier-to-noise ratio of at least one received signal, so that the processing means can apply said at least one control logic on the basis of at least said carrier-to-noise ratio;
- control means 34, e.g. a programmable voltage regulator or the like, which can be put in signal communication with the phase shifters 22a-22d and are adapted to output a control signal comprising at least one datum specifying the phase delay that each phase shifter must apply to each signal coming from the antenna 21a-21d to which said phase shifter is connected;
- a communication bus 37 allowing the exchange of information among the processing means 31, the memory means 32, the reception means 33 and the control means 34.

As an alternative to the communication bus 37, the processing means 31, the memory means 32, the reception means 33 and the control means 34 can be connected by means of a star architecture.

As aforementioned, the control means 34 may preferably comprise a programmable voltage regulator, and therefore the control signal may be at least one constant-voltage electric current; in fact, as will be further described hereinafter, the phase delay generated by each phase shifter may be dependent on the voltage value of the control signal.

It must be pointed out that the person skilled in the art will be able to use control means 34 generating control signals of a type other than the one just described (e.g. control signals compliant with the I2C communication protocol), without however departing from the teachings of the present invention.

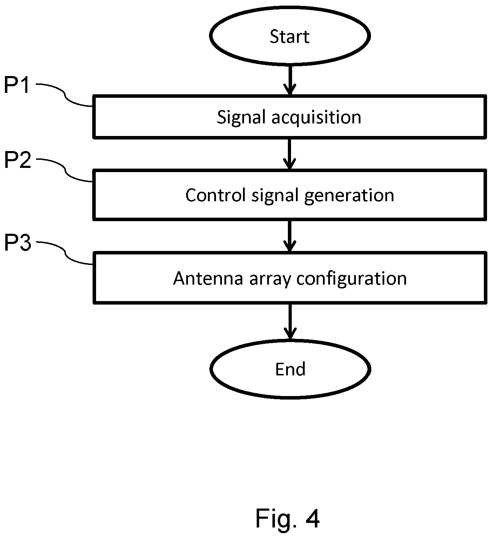

Also with reference to Fig. 4, the following will describe the method for receiving satellite positioning signals according to the invention. When the device 1 is in an operating condition, the processing means 31 of the control unit 3 execute the following phases of the method according to the invention:

a. a signal acquisition phase P1, wherein at least one satellite positioning signal, preferably emitted by at least one satellite of a constellation of artificial satellites C, is acquired through the reception means 33;

b. a control generation phase P2, wherein at least one control signal is generated on the basis of said at least one satellite positioning signal, e.g. by using at least one control logic stored in the memory means 32, which associates at least one property of the control signal (e.g. voltage, duty-cycle, or the like) with one characteristic of said at least one signal, such as a value representing its carrier-to-noise ratio, its contents, or the like;

c. an antenna configuration phase P3, wherein the control means emit said at least one control signal configuring the phase delays that each phase shifter 22a-22d will apply to the signal passing therethrough.

In this way, it is advantageously possible to increase the carrier-to-noise ratio, thereby improving the positioning precision that can be obtained by the satellite positioning device 4.

The processing unit 31 can be configured for generating (during the control generation phase) a control signal on the basis of a plurality of carrier-to-noise ratios of a plurality of satellite positioning signals received by the antennae 21a-21d, e.g. all the positioning signals that can be received by said antennae or used or usable by the positioning device 4 in order to calculate the position. In other words, in the course of the control generation phase the reception means 33 determine a plurality of carrier-to-noise ratios, wherein each carrier-to-noise ratio concerns one satellite positioning signal received by the antennae 21a-21d, and said control signal is generated on the basis of said carrier-to-noise ratios. This control logic can be used to advantage for reducing the time required by said device to determine its own first position (the so-called Time To First Fix - TTFF).

As an alternative to the above-described control logic, the processing unit 31 may be configured to generate (in the course of the control generation phase) a set of control signals, wherein each control signal is generated on the basis of a carrier-to-noise ratio of a single satellite positioning signal received by the antennae 21a-21d. In other words, during the control generation phase the reception means 33 determine at least one carrier-to-noise ratio concerning a satellite positioning signal received by the antennae 21a-21d, and said control signal is generated on the basis of said carrier-to-noise ratio. This control logic can be used to advantage for improving the precision of the position determined by the positioning device 4; in fact, by cyclically optimizing every single positioning signal receivable, it is possible to have the device 4 determine a time of flight of the signal with a higher level of precision than any other solution according to the prior art, because said device 4 will internally receive a signal having a higher carrier-to-noise ratio than in any one of said prior-art solutions. When a sufficient number of times of flight of signals have been determined (i.e. four), the device 4 will be able to determine the position on the basis of said times of flight.

As an alternative to or in combination with the above, the processing unit 31 may be configured to carry out, during the control generation phase, the following steps:

- determining a position of said at least one satellite relative to the apparatus 1 (or the antenna array 2), e.g. by computing said position on the basis of the ephemerides of said satellite, the signal emission instant of the signal emitted by said satellite, and an approximate position datum of said apparatus 1 computed by means of said device 4 (e.g. by not setting appropriate delays in the phase shifters) or another technique (e.g. based on the position of the stations of a cellular or WiFi network or the like);
- determining at least one pointing datum on the basis of said position, wherein said at least one pointing datum defines a set of phase delays that the phase shifters 22a-22d must apply in order to orient at least one radiation lobe of the antennae 21a-21d in a certain direction. This can be done, for example, by generating the pointing datum that orients each one of the radiation lobes of the antennae 21a-21d in a direction that allows receiving in the best possible manner the signals coming from the satellites used for determining the position of the apparatus 1 (or of the antenna array 2);
- generating the control signal on the basis of said at least one pointing datum thus generated.

The position of a satellite relative to the apparatus 1 (or the antenna array 2) can be defined by angular quantities such as the azimuth and the height above the horizon.

It must be pointed out that the method according to the invention is carried out by the apparatus 1 in real time, so as to optimize at best the signal entering the device 4. In particular, the processing unit 31 can be configured for determining (in real time) at least one pointing datum by executing the following sub-steps:

- computing, on the basis of said position of said at least one satellite relative to the apparatus 1 (or the antenna array 2), radiation data (e.g. an ideal radiation diagram) defining the orientation of at least one radiation lobe of said antennae 21a-21d. This can be done, for example, by generating a radiation diagram allowing the reception of the signals of each one of the satellites used for determining the position of the apparatus 1 (or of the antenna array 2) with the highest carrier-to-noise ratio;
- generating said at least one pointing datum on the basis of said radiation data, e.g. by using a technique that allows approaching as much as possible the ideal radiation diagram generated in the previous sub-step.

In combination with or as an alternative to the above, the pointing data may be associated with at least one position of a satellite relative to the receiver; to this end, the processing unit 31 can be configured for determining at least one pointing datum by selecting it from a set of pointing data contained in the memory means 32. In fact, the phase information can advantageously be determined when the apparatus 1 is not in an operating condition. For example, a first set of pointing data can be determined by means of a series of laboratory tests, during which a signal source (simulating the signal of a positioning signal) is located in a particular position relative to the apparatus 1 and the delays generated by the phase shifters are varied until a sufficiently high carrier-to-noise ratio is obtained, after which the signal source can be moved and a second set of pointing data can be determined in the same manner; this process can be repeated until a number of positions is obtained which allows attaining a sufficiently high spatial selectivity of the apparatus 1.

As already mentioned, during the control generation phase P2 the position of said emission source relative to said apparatus (1) is determined on the basis of the following elements:

- ephemeris data pertaining to at least one satellite that may have emitted said at least one satellite positioning signal;
- an emission datum transported by a satellite positioning signal received by the antennae 21a-21d and representing the time instant at which the source should have emitted said signal;
- an approximate position of said antenna array (2), which, as already described, can be computed by the device 4 (e.g. by not setting appropriate delays in the phase shifters) or by using another technique, e.g. by using the position of the stations of a cellular or WiFi network or the like.

In this way it is possible to advantageously increase the carrier-to-noise ratio, thereby improving the positioning precision obtainable by the satellite positioning device 4; moreover, it is possible to reduce the effects of the presence of any fake signals emitted by stations located in positions other than those of the satellites of the constellation of artificial satellites C, e.g. on the terrestrial surface or at sea.

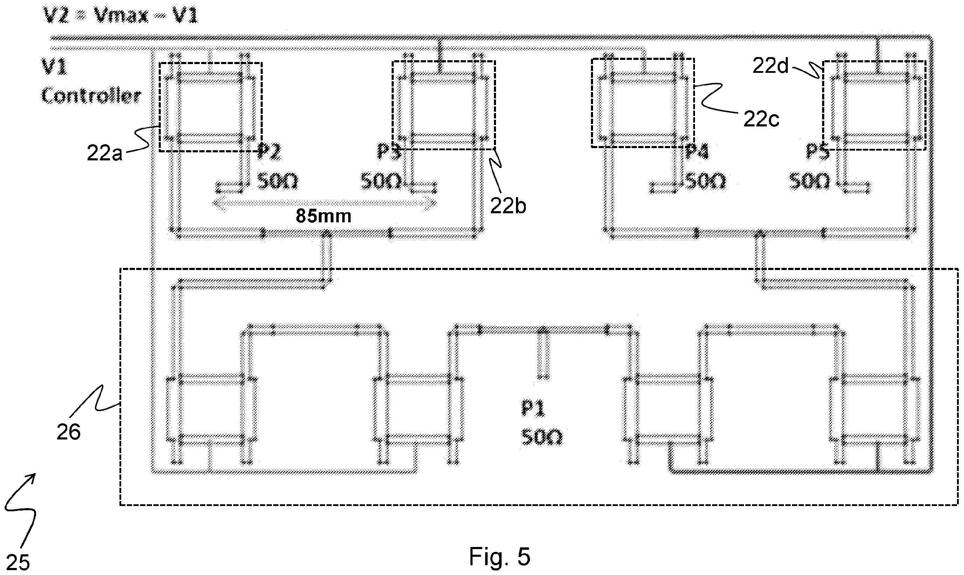

Also with reference to Figures 5, 6 and 7, the following will describe one example of embodiment of the antenna array 2; in particular, this description will tackle a beam-forming network 25 comprised in said antenna array 2, i.e. the network that connects the antennae 21a-21d to the phase shifters 22a-22d and the latter to the device 4.

The beam-forming network 25 is preferably implemented on a substrate of IS400 material having a dielectric constant of approx. 4.46, a thickness of approx. 1.55 mm, and a dielectric perturbation/loss coefficient of approx. 0.0163.

Figure 5 shows a model of one possible embodiment of the beam-forming network 25 comprising an output port P1 (also referred to as output collector 23 and preferably having an impedance of 50 Ohm), which can be put in signal communication with the reception means 33 and with a positioning device 4; in addition, said network 25 comprises also at least two (preferably four) input ports P2,P3,P4,P5 preferably having an impedance of 50 Ohm, each one of which can be put in signal communication with one of the antennae 21a-22d (not shown in the annexed photographs), which are preferably of the type known in the art, e.g. patch antennae having a size of 70 mm x 70 mm and having, in the L1 band of GPS (1575.4210 MHz), 50 Ohm of impedance and 7dBi of directivity.

The beam-forming network 25 is preferably so designed that the points supplying power to the antennae 21a-21d, i.e. the ports P2-P5, are separated by a distance of less than approx. half the wavelength of the satellite positioning signals (to be received), which is equivalent to, for a maximum scan angle of 50 sexagesimal degrees, approx. 85 millimeters for the L1 band of GPS (centered at 1575.42 MHz), so as to maintain a low level of coupling between the antennae and make it possible to obtain a maximum spatial selectivity (i.e. the maximum rotation of the radiation lobe) of about 50 sexagesimal degrees. In this way it is possible to increase the carrier-to-noise ratio of at least one of the satellite positioning signals received, thereby reducing the positioning error of the positioning device 4.

Moreover, the beam-forming network 25 is preferably so designed that the antennae 21a-21d can be positioned over said network 25 at a distance equal to the length (in the air) of approx. a quarter-wave of the satellite positioning signals (to be received), which is equivalent to approx. 47.5 millimeters for the L1 band of GPS, so as to obtain a rear lobe with a maximum gain of approx. -19 dBi. In this way, the disturbances caused by the signals reflected by the ground can be reduced, and it is possible to increase the carrier-to-noise ratio of at least one of the satellite positioning signals received, thereby reducing the positioning error of the positioning device 4.

The combination of these technical features concerning the geometry of the signal beam-forming network 25 allows obtaining remarkable spatial directivity; in fact, the main lobe has a maximum directivity of approx. 12 dBi, while the secondary lobes (i.e. those at +45 and -45 sexagesimal degrees relative to the main lobe) have gains of 15 dB less than the maximum directivity value of the main lobe. When the phase shifters are configured to cause the main lobe to take an angle of approx. 50 sexagesimal degrees, said main lobe has a maximum directivity of 11 dBi, whereas the secondary lobes have a directivity of 5 dB less than the maximum directivity value of the main lobe. Based on these values, one can understand how the apparatus 1 can reduce the disturbances due to the signals reflected by the ground, so as to increase the carrier-to-noise ratio of at least one of the satellite positioning signals received. In this way it is possible to reduce the positioning error of the positioning device 4.

The beam-forming network 25 may also comprise one or more couplers 26, preferably a 90° branch coupler controlled by means of a pair of direct currents of voltage V1,V2 generated by the control unit 3, wherein said coupler 26 is in radio-frequency signal communication with microstrip lines, each one of which is in communication with one of the ports P2-P5 (through one of the phase shifters 22a-22d), and wherein said microstrip lines have the same electric length. Also, the coupler 26 comprises four additional phase shifters similar to the shifters 22a-22d, which further increase the capacity of introducing phase shifting in the network, so as to reduce the positioning error of the positioning device 4.

Figures 6 and 7 show the phase shifters 22a-22d, which are implemented, for example, according to the description contained in the article "Linear analog hyperabrupt varactor diode phase shifters," by E. C. Niehenke, V. V. D. Marco and A. Friedberg, published in Microwave Symposium Digest, IEEE MTT-S International, pp. 657 - 660, June 1985, which should be considered to be an integral part of this description.

Each phase shifter 22a-22d is a 4-port RF device comprising two varactor diodes D1,D2 having very similar electric characteristics, which, being controlled by voltage, allow the input signal to be delayed within the range of 0-150 sexagesimal degrees; moreover, each phase shifter 22a-22d comprises also a pair of ceramic capacitors C1,C2 respectively connected in series to one of the ports P2-P5 in signal communication with one of the antennae 21a-21d and to the output port of the phase shifter 22a-22d in signal communication with the port P1 (through the coupler 24). These capacitors C1,C2 insulate the port P1, the coupler 24 and the antenna 21a-22d from the direct components caused by the presence of one of the control voltages V1,V2, while each one of the diodes D1,D2 is inversely polarized by said control voltage V1,V2, so as to create an electric capacity (necessary for delaying the output of the incoming signal) having a value dependent on the inverse polarization voltage. As aforementioned, the electric characteristics of the diodes D1, D2 must be as similar as possible, for the purpose of avoiding any distortion of the signal exiting the phase shifter; such diodes D1,D2 are preferably of the SMVA1248-079LF type available from Skyworks, since they offer very similar characteristics within the same production lot and require relatively low voltages V1,V2. In order to prevent the received signal from exiting along the lines that supply the power voltages V1, V2, the beam-forming network 25 may comprise, for each phase shifter 22a-22d, an RF stop filter 27 of the type well known to the man skilled in the art.

The input/output relationship of any one of the phase shifters 22a-22d can be described as follows:

$$Out_{Signal} = In_{Signal} \cdot e^{-j\Phi(V_{dc})} \qquad (3)$$

where $V_{dc}$ is the (constant) voltage V1 or V2, and, since the value of $V_{dc}$ is a real (non-complex) number, said voltage $V_{dc}$ defines, by means of a known function that is characteristic of the phase shifter, the phase delay that is imposed by the phase shifter 22a-22d on the incoming signal $In_{signal}$.

It must be pointed out that the antenna array 2 never changes the amplitude of the signals entering through the antennae 21a-21d; on the contrary, it only makes phase variations imposed by the phase shifters 22a-22d, so that the signal exiting through the port P1 will be the result of constructive interference between at least one of the signals directly received from the satellites of the constellation C and/or of disruptive interference between the reflections of said signals.

Of course, the example described so far may be subject to many variations.

A first variant comprises an apparatus according to the invention, which is similar to the apparatus 1 just described, wherein the control unit of said first variant of said apparatus is configured not only for executing the operations described herein for the main embodiment, but also for determining the position of said apparatus, i.e. for executing the functions carried out by the positioning device 4.

A second variant comprises an apparatus similar to the apparatuses of the two previous embodiments, wherein said apparatus can also operate on mobile means, such as, for example, boats, aircraft (e.g. multirotor aircraft, aeroplanes, helicopters, etc.), terrestrial vehicles, or the like.

More in detail, the processing unit of the control unit of said second variant of the apparatus is configured for acquiring, during the signal acquisition phase, also an orientation signal, preferably generated by an accelerometer (which may be comprised in said apparatus), wherein said signal contains at least orientation information defining the spatial orientation (e.g. relative to the gravity vector) of the antenna array, which is usually integral with the frame of the mobile means whereon it has been mounted; furthermore, said processing unit is also configured for generating the control signal, during the control generation phase, also on the basis of the orientation information. In this way it is possible to configure the antenna in an optimal manner not only on the basis of the position of at least one of the satellites of the constellation C, but also on the basis of the orientation of said antenna array, so as to increase the carrier-to-noise ratio of at least one of the satellite positioning signals received even when the apparatus of the invention changes its own inclination along at least one axis of rotation.

In addition, this variant turns out to be particularly interesting when, for example, the device is to be mounted on aircraft flying at a distance of just a few meters from buildings, i.e. in the presence of many reflections of the positioning signals; in such a situation, in fact, it is very likely that a change in the trim of the aircraft, even by only a few tens of degrees (e.g. when making a turn), will cause a change in the carrier-to-noise ratio of at least one of the signals received and used for determining the position of the vehicle. With this embodiment it is possible to mitigate this effect by adequately reconfiguring the antenna array as a function of the orientation thereof.

Although this description has tackled some of the possible variants of the invention, it will be apparent to those skilled in the art that other embodiments may also be implemented, wherein some elements may be replaced with other technically equivalent elements. The present invention is not therefore limited to the illustrative examples described herein, since it may be subject to many modifications, improvements or replacements of equivalent parts and elements without departing from the basic inventive idea, as set out in the following claims.

**Claims**

1. Apparatus (1) for receiving satellite positioning signals, comprising an antenna array (2) that comprises

   - at least two antennae (21a,21b,21c,21d) that can receive satellite positioning signals generated by at least one constellation of artificial satellites (C),
   - at least two phase shifters (22a,22b,22c,22d), each one of which comprises an input and an output and is adapted to delay, by a certain phase angle, a signal entering through said input and exiting through said output,
   - an output collector (23), which can be put in communication with a positioning device (4),

   **characterized in that**
   the input of each of said phase shifters (22a-22d) is in direct communication with one of said antennae (21a-21d), and wherein the outputs of said phase shifters (22a-22d) are connected to one another through the output collector (23), in which constructive interference can be generated between the satellite positioning signals and/or disruptive interference can be generated between the reflections of said satellite positioning signals and/or between signals coming from sources located in positions other than those of the satellites of said constellation of artificial satellites (C).

2. Apparatus according to claim 1, wherein said antenna array (2) comprises a beam-forming network (25) that puts said at least two antennae (21a-21d) in communication with said at least two phase shifters (22a-22d) and puts said at least two phase shifters (22a-22d) in communication with the output collector (23) .

3. Apparatus according to claim 2, wherein the beam-forming network (25) is so designed that the points supplying power to the antennae (21a-22d) are separated by a distance equal to the length of a half-wave of the satellite positioning signals.

4. Apparatus according to claim 2 or 3, wherein the beam-forming network (25) is so designed that the antennae (21a-21d) are positioned over said beam-forming network (25) at a distance equal to the length of a quarter-wave of the satellite positioning signals.

5. Apparatus (1) according to any one of claims 1 to 4, comprising a control unit (3) that comprises

   - reception means (33) in communication with the outputs of the phase shifters (22a-22d) and adapted to receive at least one satellite positioning signal,
   - control means (34) in signal communication with the phase shifters (22a-22d) and adapted to output at least one control signal comprising at least one datum specifying the delay that each phase shifter must apply to the signals coming from the antenna (21a-21d) to which said phase shifter (22a-22d) is connected,
   - processing means (31) in signal communication with said reception means (33) and said control means (34), wherein said processing means (31) are configured for
   - acquiring, through the reception means (33), said at least one satellite positioning signal,
   - generating said control signal on the basis of said at least one satellite positioning signal,
   - emitting, through the control means (34), said at least one control signal configuring the phase delays that each phase shifter (22a-22d) must apply to the signal passing therethrough.

6. Apparatus according to claim 5, wherein the processing unit (31) is configured for generating said at least one control signal by carrying out the steps of

   - determining a position of a source of emission of said at least one satellite positioning signal relative to said apparatus (1),
   - determining, on the basis of said position, at least one pointing datum defining a set of phase delays that the phase shifters (22a-22d) must apply in order to orient at least one radiation lobe of the antennae (21a-21d) in a certain direction, and
   - generating the control signal on the basis of said at least one pointing datum thus generated.

7. Apparatus (1) according to claim 6, wherein the processing unit (31) is also configured for determining at least one pointing datum by carrying out the sub-steps of

- computing, on the basis of said position of said at least one satellite relative to the apparatus (1), radiation data defining the orientation of at least one radiation lobe of said antennae (21a-21d), and
- generating said at least one pointing datum on the basis of said radiation data.

8. Apparatus (1) according to claims 6 or 7, wherein the memory means (32) contain at least one set of pointing data, and wherein the processing unit (31) is configured for determining at least one pointing datum by selecting it from said set of pointing data.

9. Apparatus (1) according to any one of claims 6 to 8, wherein said at least one satellite positioning signal transports at least one emission datum representing the instant of emission of said signal from the source, wherein the memory means (32) contain at least ephemeris data relating to at least one satellite that may have emitted said at least one satellite positioning signal, and wherein the processing unit (31) is also configured for

- determining an approximate position of said apparatus (1), and
- determining the position of said emission source relative to said apparatus (1) on the basis of said ephemeris data, said signal emission datum and said approximate position.

10. Apparatus (1) according to any one of claims 5 to 9, wherein the processing unit (31) is configured for

- determining, through the reception means (33), a plurality of carrier-to-noise ratios, wherein each carrier-to-noise ratio pertains to a satellite positioning signal received by the antennae (21a-21d),
- generating said control signal on the basis of said carrier-to-noise ratios.

11. Apparatus (1) according to any one of claims 5 to 9, wherein the processing unit (31) is configured for

- determining, through the reception means (33), at least one carrier-to-noise ratio pertaining to a satellite positioning signal received by the antennae (21a-21d),
- generating said control signal on the basis of said carrier-to-noise ratio.

12. Apparatus according to any one of claims 5 to 11, wherein the control unit is also configured for

- acquiring, through the reception means (33), also an orientation signal possibly generated by an accelerometer, wherein said orientation signal contains at least orientation information defining the spatial orientation of the antenna array (2), and
- generating the control signal also on the basis of said orientation information.

13. Apparatus according to any one of claims 5 to 12, wherein the control unit is also configured for determining the position of said apparatus on the basis of the positioning signals received by means of said at least two antennae (21a-21d).

14. Use of an apparatus according to claim 12 or according to claim 13 on a mobile means, such as a boat, an aircraft, a terrestrial vehicle.

**Patentansprüche**

1. Einrichtung (1) zum Empfang von Satellitenortungssignalen, umfassend eine Antennengruppe (2), die Folgendes umfasst

- mindestens zwei Antennen (21a, 21b, 21c, 21d), die Satellitenortungssignale empfangen können, die von mindestens einer Konstellation künstlicher Satelliten (C) erzeugt werden,
- mindestens zwei Phasenschieber (22a, 22b, 22c, 22d), von denen jeder einen Eingang und einen Ausgang umfasst und dazu ausgelegt ist, ein Signal, das über den Eingang eintritt und über den Ausgang austritt, um einen bestimmten Phasenwinkel zu verzögern,
- einen Ausgangssammler (23), der mit einer Ortungsvorrichtung (4) in Verbindung gebracht werden kann,

**dadurch gekennzeichnet, dass**

der Eingang jedes der Phasenschieber (22a-22d) in direkter Verbindung mit einer der Antennen (21a-21d) steht, und wobei die Ausgänge der Phasenschieber (22a-22d) über den Ausgangssammler (23) miteinander verbunden sind, wobei eine konstruktive Interferenz zwischen den Satellitenortungssignalen und/oder eine störende Interferenz zwischen den Reflexionen der Satellitenortungssignale und/oder zwischen Signalen erzeugt werden kann, die von Quellen stammen, die sich an anderen Positionen als denen der Satelliten der Konstellation künstlicher Satelliten (C) befinden.

2. Einrichtung nach Anspruch 1, wobei die Antennengruppe (2) ein strahlformendes Netzwerk (25) umfasst, das die mindestens zwei Antennen (21a-21d) mit den mindestens zwei Phasenschiebern (22a-22d) in Verbindung bringt und die mindestens zwei Phasenschieber (22a-22d) mit dem Ausgangssammler (23) in Verbindung bringt.

3. Einrichtung nach Anspruch 2, wobei das strahlformende Netzwerk (25) so beschaffen ist, dass die Punkte, die die Antennen (21a-22d) mit Energie versorgen, durch einen Abstand voneinander getrennt sind, der der Länge einer Halbwelle der Satellitenortungssignale entspricht.

4. Einrichtung nach Anspruch 2 oder 3, wobei das strahlformende Netzwerk (25) so beschaffen ist, dass die Antennen (21a-21d) über dem strahlformenden Netzwerk (25) in einem Abstand angeordnet sind, der der Länge einer Viertelwelle der Satellitenortungssignale entspricht.

5. Einrichtung (1) nach einem der Ansprüche 1 bis 4, umfassend eine Steuereinheit (3), die Folgendes umfasst

   - Empfangsmittel (33), das mit den Ausgängen der Phasenschieber (22a-22d) in Verbindung steht und dazu ausgelegt ist, mindestens ein Satellitenortungssignal zu empfangen,
   - Steuermittel (34), das in Signalverbindung mit den Phasenschiebern (22a-22d) steht und dazu ausgelegt ist, mindestens ein Steuersignal auszugeben, das mindestens ein Datum umfasst, das die Verzögerung angibt, die jeder Phasenschieber auf die von der Antenne (21a-21d), an die der Phasenschieber (22a-22d) verbunden ist, kommenden Signale anwenden muss,
   - Verarbeitungsmittel (31), das mit dem Empfangsmittel (33) und dem Steuermittel (34) in Signalverbindung steht, wobei das Verarbeitungsmittel (31) konfiguriert ist zum
   - Erfassen des mindestens einen Satellitenortungssignals durch das Empfangsmittel (33),
   - Erzeugen des Steuersignals auf der Grundlage des mindestens einen Satellitenortungssignals,
   - Aussenden, durch das Steuermittel (34), des mindestens einen Steuersignals, das die Phasenverzögerungen konfiguriert, die jeder Phasenschieber (22a-22d) auf das ihn durchlaufende Signal anwenden muss.

6. Einrichtung nach Anspruch 5, wobei die Verarbeitungseinheit (31) zum Erzeugen des mindestens einen Steuersignals konfiguriert ist, indem sie die folgenden Schritte ausführt

   - Bestimmen einer Position einer Sendequelle des mindestens einen Satellitenortungssignals relativ zu der Einrichtung (1),
   - Bestimmen, auf der Grundlage der Position, mindestens eines Richtungsdatums, das einen Satz von Phasenverzögerungen definiert, die die Phasenschieber (22a-22d) anwenden müssen, um mindestens eine Strahlungskeule der Antennen (21a-21d) in eine bestimmte Richtung auszurichten, und
   - Erzeugen des Steuersignals auf der Grundlage des mindestens einen so erzeugten Richtungsdatums.

7. Einrichtung (1) nach Anspruch 6, wobei die Verarbeitungseinheit (31) auch zum Bestimmen mindestens eines Richtungsdatums konfiguriert ist, indem sie die folgenden Teilschritte ausführt

   - Berechnen von Strahlungsdaten, die die Ausrichtung von mindestens einer Strahlungskeule der Antennen (21a-21d) definieren, auf der Grundlage der Position des mindestens einen Satelliten relativ zu der Einrichtung (1), und
   - Erzeugen des mindestens einen Richtungsdatums auf der Grundlage der Strahlungsdaten.

8. Einrichtung (1) nach Anspruch 6 oder 7, wobei das Speichermittel (32) mindestens einen Satz von Richtungsdaten enthält, und wobei die Verarbeitungseinheit (31) zum Bestimmen mindestens eines Richtungsdatums konfiguriert ist, indem es aus dem Satz von Richtungsdaten ausgewählt wird.

9. Einrichtung (1) nach einem der Ansprüche 6 bis 8, wobei das mindestens eine Satellitenortungssignal mindestens ein Sendedatum transportiert, das den Zeitpunkt der Aussendung des Signals von der Quelle darstellt, wobei das Speichermittel (32) mindestens Ephemeridendaten enthält, die sich auf mindestens einen Satelliten beziehen, der das mindestens eine Satellitenortungssignal ausgesendet haben könnte, und wobei die Verarbeitungseinheit (31) auch konfiguriert ist zum

- Bestimmen einer ungefähren Position der Einrichtung (1) und
- Bestimmen der Position der Emissionsquelle relativ zu der Einrichtung (1) auf der Grundlage der Ephemeridendaten, des Signalsendedatums und der ungefähren Position.

10. Einrichtung (1) nach einem der Ansprüche 5 bis 9, wobei die Verarbeitungseinheit (31) konfiguriert ist zum

- Bestimmen einer Vielzahl von Träger-Rausch-Verhältnissen durch das Empfangsmittel (33), wobei sich jedes Träger-Rausch-Verhältnis auf ein von den Antennen (21a-21d) empfangenes Satellitenortungssignal bezieht,
- Erzeugen des Steuersignals auf der Grundlage der Träger-Rausch-Verhältnisse.

11. Einrichtung (1) nach einem der Ansprüche 5 bis 9, wobei die Verarbeitungseinheit (31) konfiguriert ist zum

- Bestimmen, durch das Empfangsmittel (33), mindestens eines Träger-Rausch-Verhältnisses, das zu einem von den Antennen (21a-21d) empfangenen Satellitenortungssignal gehört,
- Erzeugen des Steuersignals auf der Grundlage des Träger-Rausch-Verhältnisses.

12. Einrichtung nach einem der Ansprüche 5 bis 11, wobei die Steuereinheit auch konfiguriert ist zum

- Erfassen, durch das Empfangsmittel (33), auch eines Orientierungssignals, das möglicherweise durch einen Beschleunigungsmesser erzeugt wird, wobei das Orientierungssignal zumindest Orientierungsinformationen enthält, die die räumliche Ausrichtung der Antennengruppe (2) definieren, und
- Erzeugen des Steuersignals auch auf der Grundlage der Orientierungsinformation.

13. Einrichtung nach einem der Ansprüche 5 bis 12, wobei die Steuereinheit auch zum Bestimmen der Position der Einrichtung auf der Grundlage der mittels der mindestens zwei Antennen (21a-21d) empfangenen Ortungssignale konfiguriert ist.

14. Verwendung einer Einrichtung nach Anspruch 12 oder nach Anspruch 13 auf einem mobilen Mittel, wie einem Boot, einem Flugzeug, einem Landfahrzeug.

## Revendications

1. Appareil (1) pour recevoir des signaux de positionnement par satellite, comprenant un réseau d'antennes (2) qui comprend

- au moins deux antennes (21a, 21b, 21c, 21d) qui peuvent recevoir des signaux de positionnement par satellite générés par au moins une constellation de satellites artificiels (C),
- au moins deux déphaseurs (22a, 22b, 22c, 22d), chacun d'eux comprenant une entrée et une sortie et étant agencé pour retarder, d'un certain angle de phase, un signal entrant par ladite entrée et sortant par ladite sortie,
- un collecteur de sortie (23), qui peut être mis en communication avec un dispositif de positionnement (4),

**caractérisé par le fait que**
l'entrée de chacun desdits déphaseurs (22a-22d) est en communication directe avec l'une desdites antennes (21a-21d), et les sorties desdits déphaseurs (22a-22d) étant connectées l'une à l'autre par l'intermédiaire du collecteur de sortie (23), dans lequel des interférences constructives peuvent être générées entre les signaux de positionnement par satellite et/ou des interférences perturbatrices peuvent être générées entre les réflexions desdits signaux de positionnement par satellite et/ou entre des signaux provenant de sources situées dans des positions autres que celles des satellites de ladite constellation de satellites artificiels (C).

2. Appareil selon la revendication 1, dans lequel ledit réseau d'antennes (2) comprend un réseau de formation de faisceaux (25) qui met lesdites au moins deux antennes (21a-21d) en communication avec lesdits au moins deux déphaseurs (22a-22d) et met lesdits au moins deux déphaseurs (22a-22d) en communication avec le collecteur de sortie (23).

3. Appareil selon la revendication 2, dans lequel le réseau de formation de faisceaux (25) est agencés de telle sorte que les points d'alimentation en énergie des antennes (21a-22d) sont séparés d'une distance égale à la valeur d'une demi-onde des signaux de positionnement par satellite.

4. Appareil selon la revendication 2 ou 3, dans lequel le réseau de formation de faisceaux (25) est agencé de telle sorte que les antennes (21a-21d) sont positionnées au-dessus dudit réseau de formation de faisceaux (25) à une distance égale à la longueur d'un quart d'onde des signaux de positionnement par satellite.

5. Appareil (1) selon l'une quelconque des revendications 1 à 4, comprenant une unité de commande (3) qui comprend

- des moyens de réception (33) en communication avec les sorties des déphaseurs (22a-22d) et aptes à recevoir au moins un signal de positionnement par satellite,
- des moyens de commande (34) en communication de signal avec les déphaseurs (22a-22d) et aptes à délivrer en sortie au moins un signal de commande comprenant au moins une donnée spécifiant le retard que chaque déphaseur doit appliquer aux signaux provenant de l'antenne (21a-21d) à laquelle ledit déphaseur (22a-22d) est connecté,
- des moyens de traitement (31) en communication de signal avec lesdits moyens de réception (33) et lesdits moyens de commande (34),
lesdits moyens de traitement (31) étant configurés pour
- acquérir, par l'intermédiaire des moyens de réception (33), ledit au moins un signal de positionnement par satellite,
- générer ledit signal de commande sur la base dudit au moins un signal de positionnement par satellite,
- émettre, par l'intermédiaire des moyens de commande (34), ledit au moins un signal de commande configurant les retards de phase que chaque déphaseur (22a-22d) doit appliquer au signal qui le traverse.

6. Appareil selon la revendication 5, dans lequel l'unité de traitement (31) est configurée pour générer ledit au moins un signal de commande par mise en oeuvre des étapes de

- détermination d'une position d'une source d'émission dudit au moins un signal de positionnement par satellite par rapport audit appareil (1),
- détermination, sur la base de ladite position, d'au moins une donnée de pointage définissant un ensemble de retards de phase que les déphaseurs (22a-22d) doivent appliquer afin d'orienter au moins un lobe de rayonnement des antennes (21a-21d) dans une certaine direction, et
- génération du signal de commande sur la base de ladite au moins une donnée de pointage ainsi générée.

7. Appareil (1) selon la revendication 6, dans lequel l'unité de traitement (31) est également configurée pour déterminer au moins au moins une donnée de pointage par mise en oeuvre des sous-étapes de

- calcul, sur la base de ladite position dudit au moins un satellite par rapport à l'appareil (1), de données de rayonnement définissant l'orientation d'au moins un lobe de rayonnement desdites antennes (21a-21d), et
- génération de ladite au moins une donnée de pointage sur la base desdites données de rayonnement.

8. Appareil (1) selon les revendications 6 ou 7, dans lequel les moyens de mémoire (32) contiennent au moins un ensemble de données de pointage et dans lequel l'unité de traitement (31) est configurée pour déterminer au moins une donnée de pointage par sélection de celle-ci à partir dudit ensemble de données de pointage.

9. Appareil (1) selon l'une quelconque des revendications 6 à 8, dans lequel ledit au moins un signal de positionnement par satellite transporte au moins une donnée d'émission représentant l'instant d'émission dudit signal à partir de la source, les moyens de mémoire (32) contiennent au moins des données d'éphéméride relatives à au moins un satellite susceptible d'avoir émis ledit au moins un signal de positionnement par satellite, et dans lequel l'unité de traitement (31) est également configurée pour

- déterminer une position approximative dudit appareil (1), et
- déterminer la position de ladite source d'émission par rapport audit appareil (1) sur la base desdites données d'éphéméride, de ladite donnée d'émission de signal et de ladite position approximative.

**10.** Appareil (1) selon l'une quelconque des revendications 5 à 9, dans lequel l'unité de traitement (31) est configurée pour

- déterminer, par l'intermédiaire des moyens de réception (33), une pluralité de rapports porteuse/bruit, chaque rapport porteuse/bruit se rapportant à un signal de positionnement par satellite reçu par les antennes (21a-21d),
- générer ledit signal de commande sur la base desdits rapports porteuse/bruit.

**11.** Appareil (1) selon l'une quelconque des revendications 5 à 9, dans lequel l'unité de traitement (31) est configurée pour

- déterminer, par l'intermédiaire des moyens de réception (33), au moins un rapport porteuse/bruit se rapportant à un signal de positionnement par satellite reçu par les antennes (21a-21d),
- générer ledit signal de commande sur la base dudit rapport porteuse/bruit.

**12.** Appareil selon l'une quelconque des revendications 5 à 11, dans lequel l'unité de commande est également configurée pour

- acquérir, par l'intermédiaire des moyens de réception (33), également un signal d'orientation éventuellement généré par un accéléromètre, ledit signal d'orientation contenant au moins des informations d'orientation définissant l'orientation spatiale du réseau d'antennes (2), et
- générer le signal de commande également sur la base desdites informations d'orientation.

**13.** Appareil selon l'une quelconque des revendications 5 à 12, dans lequel l'unité de commande est également configurée pour déterminer la position dudit appareil sur la base des signaux de positionnement reçus au moyen desdites au moins deux antennes (21a-21d).

**14.** Utilisation d'un appareil selon la revendication 12 ou selon la revendication 13 sur un moyen mobile, tel qu'un bateau, un aéronef ou un véhicule terrestre.

Fig. 1

Fig. 2

EP 3 625 591 B1

Fig. 3

EP 3 625 591 B1

Start

Signal acquisition

Control signal generation

Antenna array configuration

End

P1

P2

P3

Fig. 4

Fig. 5

25

22a 22b 22c 22d

26

Fig. 6

Fig. 7

22a-22d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014375500 A1
- US 5952968 A
- US 6784831 B1
- US 2008291079 A1, CHANG

**Non-patent literature cited in the description**

- **E. C. NIEHENKE ; V. V. D. MARCO ; A. FRIED-BERG.** Linear analog hyperabrupt varactor diode phase shifters. *Microwave Symposium Digest, IEEE MTT-S International,* June 1985, 657-660